# EUROPEAN PATENT APPLICATION

(11) **EP 4 745 691 A1**
(43) Date of publication of application: **20.05.2026**
(21) Application number: 25216303.5
(22) Date of filing: 17.11.2025
(51) Int. Cl.: G05B 19/401, B23Q 17/24, G01B 11/24

(54) **MACHINE FOR PROCESSING SLAB-SHAPED WORKPIECES**

(30) Priority: 18.11.2024 IT 202400025923
(71) Applicant: C.M.S. S.p.A., 24019 Zogno (BG) (IT)
(72) Inventor: SALVI, Ettore, 24030 Berbenno (BG) (IT)
(74) Representative: Stampa, Francesco

(57) **Abstract**

Machine for processing a slab-shaped workpiece delimited by a rim, comprising:
- support means adapted to support the workpiece;
- processing means actuatable to process the workpiece;
- movement means actuatable to move the processing means relative to the workpiece allowing the processing of the workpiece by means of the processing means;
- detection means adapted to locate at least part of the rim;
- a control unit configured to actuate the processing means and the movement means on the basis of the rim as located by the detection means;
wherein the detection means comprise an image capture device that can be controlled by the control unit in order to move with respect to the workpiece and to sequentially capture and transmit to the control unit a first image and a plurality of further images of the rim, wherein each image has a centre and an outline, and depicts a portion of the rim that intersects the outline in a first intersection point and a second intersection point, wherein the control unit is configured to control the image capture device in such a way that each further image depicts the first intersection point of the image captured immediately before.

## Description

The present invention relates to a machine for processing slab-shaped workpieces delimited by a continuous rim, and in particular to a machine comprising means for detecting such rim.

In the field of slab-shaped workpieces processing, in particular glass slabs, numerical control automatic machines (also known as working centres) have long been known, which are configured to perform various types of processing on the workpiece loaded therein, such as, for example, grinding of the rims of the workpiece, edging, milling, and drilling.

A machine of such type generally comprises support means adapted to support and maintain the workpiece in position on a processing plane (which can be horizontal or vertical), processing means (such as for example tools) configured to perform various types of processing on the workpiece, movement means actuatable to move the processing means and the support means with respect to each other so as to allow the workpiece to be processed by the processing means, and a control unit configured to actuate the movement means and the processing means to perform the processing according to a predetermined program.

The machine can further comprise detection means for the rim of the workpiece, which are adapted to locate the rim of the workpiece in such a way that the control unit controls the processing based on the actual shape and dimensions of the workpiece to be processed. In this way, the workpiece processing can be performed with high precision, obtaining a processed workpiece that matches the desired one as closely as possible.

Currently, the detection means for the rim usually comprise a lever mounted aboard a carriage that is movable on the processing plane, wherein the lever is rotatable with respect to the carriage around an axis perpendicular to the processing plane and has a movable end on which a rubber-coated roller is mounted, rotatable in turn with respect to the lever. By moving the carriage and rotating the lever by means of appropriate controlled actuators, the roller is rolled along the entire rim of the workpiece to be processed: by detecting point-by-point the position of the carriage with respect to the workpiece and the rotation angle of the lever, it is therefore possible to reconstruct the outline of the rim of the workpiece.

However, such solution has some drawbacks. First, the roller is usually coated in rubber so as not to damage the rim of the workpiece when rolling along it, and is therefore subject to considerable wear due to contact with the unground rim of the workpiece to be processed. Such wear, which, as a result of workpieces of different thickness, is quite irregular and difficult to predict in extent, can cause errors in reconstructing the rim and requires frequent recalibration of the detection means (to be performed by interrupting the processing), causing a reduction in the overall productivity of the machine.

Moreover, in order to keep the roller constantly in contact with the rim, also at the respective corners, and thus allow for accurate reconstruction of the entire rim, the rotation of the lever with respect to the carriage must occur at high speed: during its movement, the lever thus exerts high forces on the workpiece, with the risk of displacing the workpiece and making the ongoing reconstruction of the rim inaccurate, as well as the subsequent processing.

The object of the present invention is to overcome the above-mentioned drawbacks, and in particular to make a machine for processing slab-shaped workpieces comprising detection means for the rim of the workpiece which ensure a quick and accurate reconstruction of the rim itself and precise subsequent processing, while also obtaining a high overall productivity of the machine.

These and other results are obtained according to the present invention by making a machine according to claim 1.

Further features of the invention are the subject of the dependent claims.

The present invention will now be described, by way of example but not limitation, according to its preferred embodiments, with reference to the figures of the attached drawings, wherein:
- Figure 1 is a front view of a machine according to the invention;
- Figure 2 is an enlarged view of a detail of Figure 1. With reference to Figure 1, number 1 indicates as a whole a machine for processing a slab-shaped workpiece P delimited by a rim B (visible in Figure 2).

The machine 1 first comprises support means 2 adapted to support the workpiece P in a processing position. The support means 2 can comprise a processing plane on which the workpiece P can rest during processing. Preferably, the processing plane is positioned substantially vertically, in such a way that the workpiece P is also positioned substantially vertically during processing, and defines a first direction y, substantially vertical, and a second direction x, substantially horizontal (perpendicular to the first direction y).

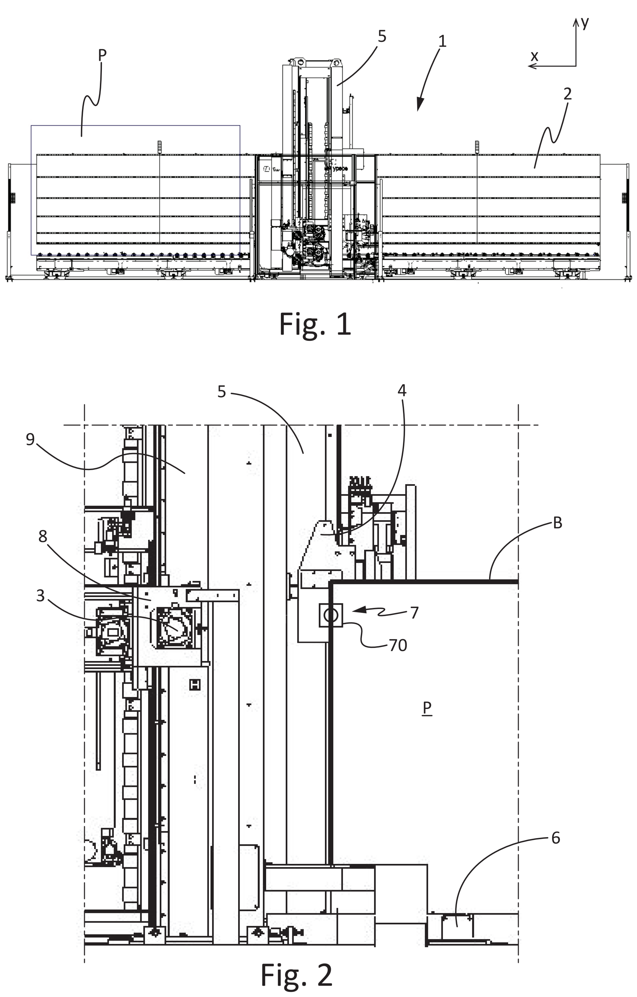

With reference to Figure 2, the machine 1 further comprises processing means 3 selectively actuatable to process the workpiece P. The processing means 3 can comprise, for example, a processing head on which a plurality of processing tools can be mounted interchangeably, each of them being capable of performing a different processing on the workpiece P, such as, for example, grinding of the rim B, drilling, or milling of the workpiece P.

The machine 1 further comprises movement means selectively actuatable to move the processing means 3 relative to the workpiece P when it is supported in the processing position, allowing the workpiece P to be processed by means of the processing means 3. Preferably, the processing means 3 are positioned on a second carriage 8 that is movable with respect to the workpiece P parallel to the processing plane, and the movement means are actuatable to move the second carriage 8 relative to the workpiece P. The movement means can comprise, for example, one or more electromechanical actuators, in particular one or more electric motors. More specifically, the second carriage 8 is movable along the first direction y by sliding on a second crossbeam 9 that is fixed with respect to the support means 2 and extends along the first direction y, and the movement means comprise third actuation means actuatable to move the second carriage 8 on the second crossbeam 9. Furthermore, the processing means 3 are positioned on the second carriage 8 in such a way as to be movable with respect to the second carriage 8 along a third direction z, which is perpendicular to the first direction y and to the second direction x, to and from the workpiece P. Furthermore, the movement means comprise holding means 6 configured to hold the workpiece P, and second actuation means actuatable to move the holding means 6 along the second direction x with respect to the support means 2 so as to move the workpiece P on the processing plane. In this way, by combining the movements of the second carriage 8 on the second crossbeam 9, of the processing means 3 with respect to the second carriage 8, and of the holding means 6 with respect to the support means 2, the movement means are capable of moving the processing means 3 and the workpiece P with respect to each other in the three spatial directions x, y, and z, allowing for the execution of a wide variety of processing.

The holding means 6 can comprise, for example, one or more suction cups configured to grip the workpiece P. The machine 1 further comprises a control unit (not visible in the figures) configured to automatically actuate the processing means 3 and the movement means, commanding the relative movement between the processing means 3 and the workpiece P in order to perform the processing.

The machine 1 further comprises detection means 7 adapted to locate at least part of the rim B, in such a way that the control unit can control the processing based on the actual shape, actual dimensions, and actual position of the workpiece P.

The detection means 7 comprise an image capture device 70 that can be controlled by the control unit in order to move with respect to the workpiece P, in particular on a capture plane that is parallel to the processing plane, in such a way that it can move along the rim B of the workpiece P.

The image capture device 70 can further be controlled by the control unit to first capture and transmit to the control unit a first image of the rim B, and subsequently a series of further images of the rim B, wherein each image has a centre and an outline (preferably rectangular-shaped), and depicts a portion of the rim B that intersects the outline in two intersection points, specifically a first intersection point and a second intersection point. Furthermore, the control unit controls the image capture device 70 in such a way that each further image depicts the first intersection point of the image captured immediately before.

In this way, it can be ensured that the part of the rim B to be located is located entirely and continuously on the basis of the different portions of the rim B depicted in the various images. Indeed, the control unit controls the repositioning of the image capture device 70 based on the image just captured, so that the image captured immediately afterward also depicts the point where the portion of the rim B depicted in the image just captured ends (because it intersects the outline), making it possible to continue locating its trend.

This allows the rim B to be located quickly and accurately. Furthermore, since there is no contact between the detection means and the workpiece P, any risk of displacement of the workpiece P during the operations of locating the rim B is avoided: this enables in turn precise and high-productive processing. Preferably, the centre of each further image corresponds to the first intersection point of the image captured immediately before. In this way, the control unit controls the repositioning of the image capture device 70 by selecting as the centre of the next image precisely the point where the portion of the rim B depicted in the image just captured ends.

Preferably, the control unit identifies the portion of the rim B depicted in each image and then identifies the second intersection point as the intersection point (of the two present) that is also depicted in the image captured immediately before; it is apparent that the second intersection point thus identified in each image is not necessarily also an intersection point in the image captured immediately before, but can instead be any point on the portion of the rim B depicted therein. The first intersection point is therefore identified as the other intersection point.

Preferably, for each image, the portion of the rim B, the second intersection point, and the first intersection point are identified by the control unit by means of a computer vision algorithm. In this way, the first intersection point of each image is determined automatically and with high precision.

Preferably, the first image of the rim B is captured by the image capture device 70 at a reference mechanical stop for the workpiece P.

Preferably, the image capture device 70 is positioned on a first carriage 4 movable along the first direction y on a first crossbeam 5 that is fixed with respect to the support means 2 and substantially parallel to the second crossbeam 9, and the movement means also comprise first actuation means actuatable to move the first carriage 4 on the first crossbeam 5. In this way, by combining the movement of the first carriage 4 on the first crossbeam 5 (by means of the first actuation means) and of the holding means 6 with respect to the support means 2 (by means of the second actuation means), the movement means are capable of moving the image capture device 70 and the workpiece P with respect to each other along the first direction y and along the second direction x, allowing the entire rim B of the workpiece P to be located.

Furthermore, the movement of the image capture device 70 along the first direction y is independent from that of the processing means 3, and this allows processing on the rim B of the workpiece P to be performed by having the processing means 3 follow the rim B as it is progressively located by the image capture device 70. In this case, therefore, locating and processing the rim B can occur simultaneously.

Alternatively, the image capture device 70 and the processing means 3 can be positioned on the same carriage. In this way, it is possible to avoid providing independent movement for the image capture device 70, but it becomes necessary to provide a step of locating the rim followed by a distinct processing step. Preferably, the detection means 7 also comprise illumination means (not represented in the figures) adapted to illuminate at least the portion of the rim B depicted in the image captured, from time to time, by the image capture device 70. The illumination means preferably comprise one or more light sources positioned next to the image capture device 70 on the first carriage 4, so as to be movable with it with respect to the workpiece P. In this way, the images are always captured with optimal illumination.

Preferably, the detection means 7 also comprise a contrast screen (not represented in the figures). The screen can be positioned in such a way that, when the image capture device 70 captures an image, the portion of the rim B that will be depicted in such image is placed between the image capture device 70 and the contrast screen. The screen can be positioned on the first carriage 4 together with the image capture device 70.

Preferably, the image capture device 70 consists in a camera.

The present invention has been described, by way of example but not limitation, according to its preferred embodiments, but it is to be understood that variations and/or modifications can be made by a person skilled in the art without thereby departing from the related scope of protection as defined in the attached claims.

## Claims

1. Machine (1) for processing a slab-shaped workpiece (P) delimited by a rim (B) comprising:
- support means (2) adapted to support the workpiece (P) ;
- processing means (3) actuatable to process the workpiece (P);
- movement means actuatable to move the processing means (3) relative to the workpiece (P) allowing the processing of the workpiece (P) by means of the processing means (3);
- detection means (7) adapted to locate at least part of the rim (B);
- a control unit configured to actuate the processing means (3) and the movement means on the basis of the rim (B) as located by the detection means (7);
**characterized in that** the detection means (7) comprise an image capture device (70) that can be controlled by the control unit in order to move with respect to the workpiece (P) and to sequentially capture and transmit to the control unit a first image and a plurality of further images of the rim (B), wherein each image has a centre and an outline and depicts a portion of the rim (B) that intersects the outline in a first intersection point and in a second intersection point, wherein the control unit is configured to control the image capture device (70) in such a way that each further image depicts the first intersection point of the image captured immediately before.

2. Machine (1) according to claim 1, wherein the centre of each further image corresponds to the first intersection point of the image captured immediately before.

3. Machine (1) according to any one of the preceding claims, wherein the control unit is configured to identify the portion of the rim (B) depicted in each image, in order to identify the second intersection point as the intersection point that is depicted also in the image captured immediately before, and in order to identify the first intersection point as the other intersection point.

4. Machine (1) according to claim 3, wherein the portion of the rim (B) depicted in each image, the second intersection point and the first intersection point are identified by means of an artificial vision algorithm.

5. Machine (1) according to any one of the preceding claims, wherein the image capture device (70) is positioned on a first carriage (4) that is movable along a first direction (y) on a first crossbeam (5) that is fixed with respect to the support means (2), and the movement means comprise first actuation means actuatable to move the first carriage (4) on the first crossbeam (5), holding means (6) adapted to hold the workpiece (P) and second actuation means actuatable to move the holding means (6) with respect to the first crossbeam (5) along a second direction (x) substantially perpendicular to the first direction (y).

6. Machine (1) according to claim 5, wherein the processing means (3) are positioned on a second carriage (8) that is movable along the first direction (y) on a second crossbeam (9) that is fixed with respect to the support means (2), and the movement means further comprise third actuation means actuatable to move the second carriage (8) on the second crossbeam (9).

7. Machine (1) according to any one of the preceding claims, wherein the detection means (7) comprise illumination means adapted to illuminate at least part of the rim (B) when the image capture device (70) captures each image.

8. Machine (1) according to claim 7, wherein the illumination means comprise at least one light source positioned next to the image capture device (70) and movable with it with respect to the workpiece (P).

9. Machine (1) according to any one of the preceding claims, wherein the detection means (7) comprise a contrast screen that can be positioned in such a way that, when the image capture device (70) captures each image, the portion of the rim (B) depicted in the image is placed between the image capture device (70) and the contrast screen.

10. Machine (1) according to any one of the preceding claims, wherein the image capture device (70) consists in a camera.
